# EUROPEAN PATENT APPLICATION

(11) **EP 1 865 610 A2**
(43) Date of publication of application: **12.12.2007**
(21) Application number: 06121670.1
(22) Date of filing: 03.10.2006
(51) Int. Cl.: H04B 1/38

(54) **Radio device and control method therefor**

(30) Priority: 07.06.2006 JP 2006158408
(71) Applicant: Fujitsu Ltd., Kawasaki-shi, Kanagawa 211-8588 (JP)
(72) Inventor: Shibuya, Yasuhiro, Kawasaki-shi, Kanagawa 211-8588 (JP); Endo, Yoichi, Kawasaki-shi, Kanagawa 211-8588 (JP)
(74) Representative: Hitching, Peter Matthew

(57) **Abstract**

A radio device (1), that performs time division duplexing or half frequency duplexing and has transmission output amplifiers (41, 42, 43) that accept a transmission radio-frequency signal and amplify the same, comprises an operating state switching portion (5) that switches the operating state of the radio device (1) between transmission operation and non-transmission operation; and a gain modification portion (Q7, Q71, Q72, Q73, 54) that lowers the gain of the transmission output amplifiers during non-transmission operation, in accordance with a switching signal from the operating state switching portion (5).

## Description

### CROSS REFERENCE TO RELATED APPLICATION

This application is based upon and claims the benefit of priority from prior Japanese Patent Application No. 2006-158408, filed on June 7, 2006, the entire contents of which being incorporated herein by reference.

### BACKGROUND OF THE INVENTION

### 1. Field of the Invention

The present invention relates to a radio device, and a control method therefor, that performs a type of half duplex transfer such as time division duplex (TDD) or half frequency division duplex (HFDD) and, in particular, to a control method used when transmission output is halted in such a radio device.

### 2. Description of the Related Art

Time division duplex (TDD) is an electrical communications technique by which transmission and reception signals are compressed on a time basis, and transmission and reception are switched at fixed times, to enable full duplex communications. This is employed in the Worldwide Interoperability for Microwave Access (WiMAX) standard that conforms to IEEE 802.16 that the IEEE has recently been promoting. WiMAX is a wide-area radio technology that is being examined as means of implementing last-mile high-speed communications for industrial and domestic purposes, known as fixed wireless access (FWA).

With Wi-Fi radio technology (IEEE 802.11) that is currently popular for domestic and public wireless LAN services, the coverage of the base station is a radius on the order of 50 to 100 m with a communications speed of a few tens of Mbit/s, but the employment of a typical WiMAX system would implement a coverage of 5 km around the base station and a maximum communications speed of 75 Mbit/s (although these figures will vary with the usage environment and the system configuration).

However, the target application of wiMAX is not just FWA, but also application to a wider utilization of mobile communications. The implementation of WIMAX is expected to enable a mobile environment with a coverage of about 2 to 3 km around the base station and a communications speed on the order of 15 Mbit/s. With IEEE 802.16e, it is possible to envision broadband services in vehicles, such as cars or trains operating at high speeds (on the order of 120 km/s), enabling the creation of service utilization scenarios that have not been possible up to now.

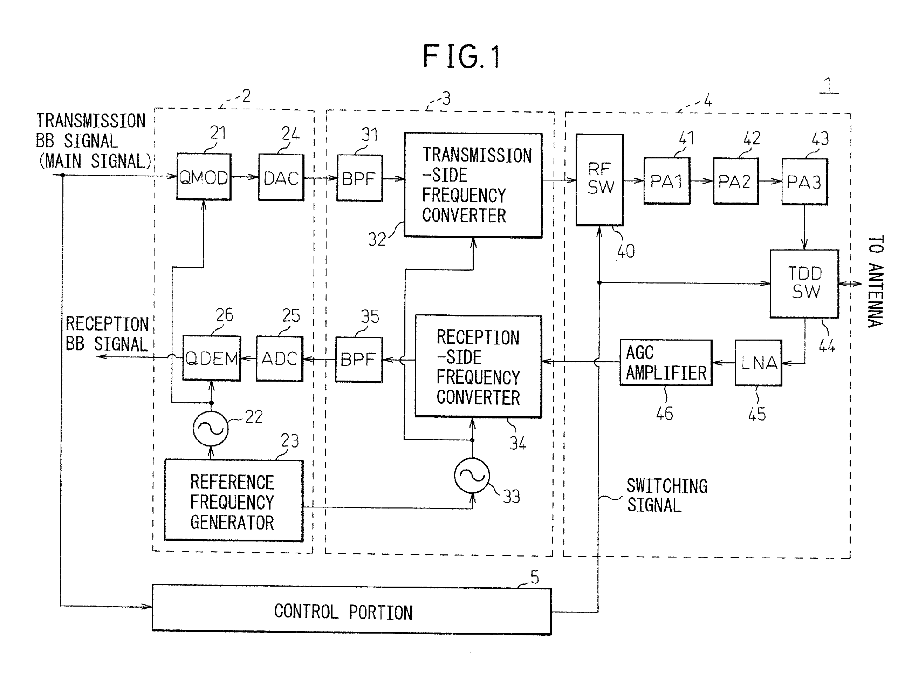

The configuration of a prior-art radio device that employs the time division duplex method is shown schematically in Fig. 1. A radio device 1 comprises a modulation/demodulation portion 2 that modulates transmission signals and demodulates reception signals, a frequency converter 3 that converts a modulated transmission signal from an intermediate-frequency signal to a radio-frequency signal and converts a received reception signal from a radio-frequency signal to an intermediate-frequency signal, a radio high-frequency portion 4 that switches between output of a transmission radio-frequency signal to an antenna and input of a received radio-frequency signal from the antenna, and a control portion 5 that switches the operating state of the radio device 1 between transmission operation and reception operation.

The following description first concerns the transmission circuitry provided in each of the modulation/demodulation portion 2, the frequency converter 3, and the radio high-frequency portion 4. The modulation/demodulation portion 2 comprises a digital modulator (QMOD) 21 that performs quadrature modulation on a digital baseband signal (transmission BB signal) to be transmitted, an oscillator 22 that generates a complex sine-wave signal that the digital modulator uses for quadrature modulation, a reference frequency generator 23 that supplies an oscillation signal that forms a reference for this complex sine-wave signal, and a digital/analog converter (DAC) 24 that converts the orthogonal IF signal that has been modulated by the digital modulator 21 into an analog signal.

The frequency converter 3 comprises a band-pass filter (BPF) 31 that restricts the band of an analog IF transmission signal that has been converted by the digital/analog converter 24, a transmission-side frequency converter 32 that converts the frequency of the band-restricted analog IF transmission signal to a radio-frequency signal, and a local oscillator signal generator 33 that generates a local oscillator signal that the transmission-side frequency converter 32 uses in the frequency conversion, based on a reference oscillation signal supplied from the reference frequency generator 23.

The radio high-frequency portion 4 comprises a radio-frequency band switch (RFSW) 40 that switches between the output of the transmission radio-frequency signal that has been converted into a radio-frequency signal by the transmission-side frequency converter 32 and the halting of the output thereof, a plurality of high-power transmission output amplifiers (PAs) 41 to 43 that are connected in multiple serial stages for amplifying the transmission radio-frequency signal that has passed through the radio frequency band switch 40, and a time division duplex switch (TDDSW) 44 that implements time division duplexing by connecting the transmission circuitry and reception circuitry of the radio device 1 alternately to an antenna (not shown in the figure).

The following description concerns the reception circuitry provided in each of the modulation/demodulation portion 2, the frequency converter 3 and the radio high-frequency portion 4.

The radio high-frequency portion 4 comprises a low-noise amplifier (LNA) 45 that amplifies a reception radio-frequency signal that has been received through the antenna (not shown in the figure) and passed through the time division duplex switch 44, and a variable-gain amplifier (AGC amp) 46.

The frequency converter 3 comprises a reception-side frequency converter 34 that converts the reception radio-frequency signal that has been output from the variable-gain amplifier 46 into an IF signal of an intermediate frequency with the local oscillator signal that the local oscillator signal generation portion 33 generates, and a band-pass filter (BPF) 35 that restricts the band of the converted reception IF signal.

The modulation/demodulation portion 2 comprises an analog-digital conversion circuit (ADC) 25 that converts the analog reception IF signal that has had the band thereof restricted by the band-pass filter 35 into a digital IF signal, and a digital demodulator (QDEM) 26 that demodulates the thus-converted digital reception signal into a baseband signal (reception BB signal) with the complex sine-wave signal generated by the oscillator 22.

The following description concerns the operation of the transmission circuitry in the signal transmission state. A transmission baseband signal that is input to the modulation/demodulation portion 2 is modulated by the digital modulator 21 then is converted into a transmission IF signal that is a modulated waveform of the intermediate frequency band, by the digital/analog converter 24. After unwanted components have been stripped from the transmission IF signal by the band-pass filter 31, the transmission IF signal is converted to a transmission radio-frequency signal by the transmission-side frequency converter 24 and input to the radio frequency band switch 40.

When the operating state of the radio device 1 is transmission, the control portion 5 controls the switching of the radio frequency band switch 40 in such a manner that the transmission-side frequency converter 32 and the later-stage transmission output amplifier 41 are connected. The control portion 5 also switches the time division duplex switch 44 to connect the final-stage transmission output amplifier 43 and the antenna (not shown in the figure).

The transmission radio-frequency signal that has passed through the radio-frequency band switch 40 is amplified to a desired output level by the serially connected multi-stage transmission output amplifiers 41 to 43 then is output through the time division duplex switch 44 to the antenna.

The following description concerns the operation of the reception circuitry in the signal reception state. A reception signal that has been received by the antenna (not shown in the figure) is input to the time division duplex switch 44. In this case, the control portion 5 switches the time division duplex switch 44 to connect the antenna (not shown in the figure) and the reception circuitry, when the operating state of the radio device 1 is a reception operation (in other words, non-transmission operation). During this time, the control portion 5 controls the switching of the radio-frequency band switch 40 in such a manner that the connection between the transmission-side frequency converter 32 and the later-stage transmission output amplifier 41 is interrupted.

The received radio-frequency signal that has passed through the time division duplex switch 44 is amplified by the low-noise amplifier 45 that introduces only a small increase in noise, and the signal strength is controlled by the variable-gain amplifier 46 in such a manner that the input at the analog-digital converter 25 is constant regardless of fluctuations in the incoming signal strength. The received radio-frequency signal that has been amplified to a constant level is converted to the intermediate frequency band by the reception-side frequency converter 43, then is input to the analog-digital converter 25 after unnecessary components therein have been suppressed by the band-pass filter 35. The signal that has been converted to a digital signal by the analog-digital converter 25 is converted into a reception baseband signal by the digital demodulator 25 and is output from the modulation/demodulation portion 2.

The switching of the radio-frequency band switch 40 and the time-division duplex switch 44 by the control portion 5 will now be described. As an example, the control portion 5 detects whether or not a transmission baseband signal is being input to the modulation/demodulation portion 2, then sets the operating state of the radio device 1 to a non-transmission operation if there is no transmission baseband signal or to transmission operation if there is a transmission baseband signal.

Alternatively, the control portion 5 decodes overhead information that is inserted into a control signal comprised within a transmission baseband signal, then detects that the operating state of the radio device 1 is non-transmission operation if there is a transmission halt instruction signal within the overhead information or that the operating state of the radio device 1 is transmission operation if there is an ordinary transmission instruction signal within the overhead information.

When the operating state of the radio device 1 is set to a non-transmission operation, the control portion 5 switches the radio-frequency band switch 40 so that the transmission-side frequency converter 32 and the transmission output amplifier 41 are disconnected. The control portion 5 switches the time division duplex switch 44, that is a two-pole switch, such that the transmission output amplifier 43 and the antenna (not shown in the figure) are disconnected, and such that the reception circuitry is connected to the antenna.

When the operating state of the radio device 1 is set to transmission operation, the control portion 5 switches the radio-frequency band switch 40 so as to connect the transmission-side frequency converter 32 and the transmission output amplifier 41. The control portion 5 switches the time division duplex switch 44 such that the transmission output amplifier 43 is connected to the antenna (not shown in the figure), and such that the reception circuitry and the antenna are disconnected.

If the radio device 1 is simply switched between transmission operation and reception operation (or a non-transmission operation) during the above-described operation, it is possible that only the time-division duplex switch 44 is necessary and thus there is no need for the radio-frequency band switch 40. The role of the radio-frequency band switch 40 is discussed below.

In the non-transmission operation state in which there is no transmission baseband signal, there is no input of a main signal to the transmission output amplifiers 41 to 43 but, as there is a noise component, that noise component is amplified by the transmission output amplifiers 41 to 43 and is input to the time-division duplex switch 44.

When the time-division duplex switch 44 is switched to connect the antenna (not shown in the figure) and the reception circuitry, there is no problem provided the noise component level entering the low-noise amplifier 45 from the transmission output amplifier 43 through the time-division duplex switch 44 can be removed sufficiently, but the isolation level of an electronic switch that is usually used as the time-division duplex switch 44 is on the order of 20 to 30 dB.

In this case, if the requirement for the strength of the permitted noise component is -100 dBm when the incoming signal wave strength is extremely weak, a noise component of -80 dBm will leak through the time-division duplex switch 44 from the transmission circuitry into the reception circuitry even if the noise component generated by the transmission circuitry is suppressed to about -50 dBm, by way of example, making signal communication impossible when the incoming signal wave strength is extremely weak. That is why the radio-frequency band switch 40 is provided in the transmission circuitry, in order to suppress any invasion of a noise component from the transmission circuitry into the reception circuitry, and the effects of the noise component on the reception circuitry are prevented by lowering the gain of the transmission signal midway through the transmission circuitry in the non-transmission operation state.

### SUMMARY OF THE INVENTION

The radio device 1 shown in Fig. 1 is used in a device such as a personal handyphone system (PHS) device, but the problem described below might occur if it were to be used in future radio devices that provide high levels of output and high gain amplification, such as WiMAX radio devices.

In other words, a radio device that transmits a high-output signal, such as a WiMAX radio device, has a problem in that the amount of power consumed by the transmission circuitry increases and the power consumed wastefully by the transmission output amplifier during reception also increases.

Secondly, in a radio device that provides high gain amplification, the suppression of noise which leaks into the reception circuitry would be insufficient if the suppression of noise is carried out only by the radio-frequency band switch 40 shown in Fig. 1. In particular, if direct conversion modulation, in which a local oscillator signal of radio frequency is mixed into an analog baseband signal, is employed to implement quadrature modulation, there is a danger that the frequency of the local oscillator signal will appear at the center of the radio-frequency signal band of the signal that is input to the radio-frequency band switch 40 if there is no transmission baseband signal to be modulated, and thus that component will leak into the reception circuitry.

The present invention was devised in the light of the above-described problems with the objective of reducing power consumption and also decreasing the leakage of noise components from the transmission circuitry to the reception circuitry during non-transmission operation, in a radio device, and control method therefor, that performs a type of half duplex transfer such as time division duplex or half frequency division duplex.

In order to achieve the above-described objective, in the present invention, the gain of a transmission output amplifier that is provided to amplify transmission radio-frequency signals is lowered when a radio device that performs time division duplexing or half duplexing is in a non-signal-transmission state. In addition, the strength of the predetermined local oscillator signal that is used for converting the frequency of a transmission signal to radio signal frequency is reduced when a radio device that performs time division duplexing or half duplexing is in a non-signal-transmission state.

According to a first mode of the present invention, a radio device is provided which performs time division duplexing or half duplexing and which has a transmission output amplifier that amplifies a transmission radio-frequency signal. This radio device comprises an operating state switching portion that switches the operating state of the radio device between transmission operation and non-transmission operation, and a gain modification portion that lowers the gain of the transmission output amplifier during non-transmission operation in accordance with a switching signal from the operating state switching portion.

In this case, the transmission output amplifier may comprise a field-effect transistor that amplifies the transmission radio-frequency signal. If so, the gain modification portion may modify the gain of the transmission output amplifier by modifying the drain bias voltage that is supplied to this field-effect transistor and/or modifying the gate bias voltage that is applied to the field-effect transistor. If the gain modification portion modifies both the drain bias voltage and the gate bias voltage, the gain modification portion may modify these bias voltages at different times.

The transmission output amplifier may be a plurality of amplifiers connected in series. In such a case, the gain modification portion may lower the gain of the earlier-stage amplifiers first. The gain modification portion may lower the gain of a different number of amplifiers among this plurality of amplifiers, depending on the length of the period of non-transmission operation.

In addition, a radio device in accordance with the present invention may comprise a frequency converter that converts the frequency of a transmission signal to radio signal frequencies and a local oscillator signal strength modification portion that reduces the strength of the local oscillator signal used by the frequency converter, during non-transmission operation in accordance with a switching signal from the operating state switching portion.

In this case, the radio device could comprised a field-effect transistor that inputs and outputs the local oscillator signal. The local oscillator signal strength modification portion may modify the strength of the local oscillator signal by modifying the drain bias voltage supplied to this field-effect transistor and/or modifying the gate bias voltage applied to this field-effect transistor. If the local oscillator signal strength modification portion modifies both the drain bias voltage and the gate bias voltage, the local oscillator signal strength modification portion may modify these bias voltages at different times.

According to a second mode of the present invention, a method of controlling a radio device is provided, wherein the radio device modifies a transmission radio-frequency signal by a transmission output amplifier and also performs time division duplexing or half duplexing, and wherein the gain of the transmission output amplifier is lowered during non-signal-transmission.

In addition, according to the present invention, a method of controlling a radio device is provided, wherein the radio device converts the frequency of a transmission signal to a radio signal frequency by using a predetermined local oscillator signal and performs time division duplexing or half duplexing, and wherein the strength of the local oscillator signal is lowered when no signal is being transmitted.

### BRIEF DESCRIPTION OF THE DRAWINGS

The present invention will be more clearly understood from the description as set below with reference to the accompanying drawings, wherein:
Fig. 1 is a schematic configurational diagram of a prior-art radio device that employs a time division duplex method;
Fig. 2 is a schematic configurational diagram of a radio device in accordance with an embodiment of the present invention;
Fig. 3 shows a first example of the configuration of the interiors of the components shown in Fig. 2;
Fig. 4 shows an example of the configuration of each of the high-power transmission output amplifiers shown in Fig. 3;
Fig. 5 shows a first example of the configuration of the control portion of Figs. 2 and 3;
Fig. 6A is a timing chart of the transmission baseband signal that contains transmission on/off control information;
Fig. 6B is a timing chart of the transmission on/off control information extracted from the transmission baseband signal of Fig. 6A;
Fig. 6C is a timing chart of output variations in the modulation portion during transmission operation and non-transmission operation;
Fig. 6D is a timing chart of output variations in the radio high-frequency portion during transmission operation and non-transmission operation;
Fig. 6E is a timing chart of the switch switchover signal and drain voltage control signal that are controlled by the transmission on/off control information;
Fig. 7 shows an example of the configuration of the signal source that supplies a transmission baseband signal that contains the transmission on/off control information of Fig. 6A;
Fig. 8A is a timing chart of transmission on/off control information;
Fig. 8B is a timing chart of a main signal of a transmission baseband signal that does not contain transmission on/off control information;
Fig. 8C is a timing chart of the transmission baseband signal that has been multiplexed with the transmission on/off control information of Fig. 8A and the main signal of Fig. 8B;
Fig. 9 shows a first example of the configuration of the power source that exerts variable control over the drain bias voltage supplied to each transmission output amplifier by a drain voltage control signal from the control portion;
Fig. 10 shows a second example of the configuration of the control portion of Figs. 2 and 3;
Fig. 11 shows a second example of the configuration of the power source;
Fig. 12 is a flowchart of the operation of the control portion of Fig. 10;
Fig. 13A is a timing chart of the switching signal that is controlled by the flowchart of Fig. 12;
Figs. 13B to 13D are timing charts of each of the drain voltage control signals controlled by the flowchart of Fig. 12;
Fig. 14A shows a first example of the configuration of the gate bias control portion of Fig. 5;
Fig. 14B shows a second example of the configuration of the gate bias control portion of Fig. 5;
Fig. 15 shows an example of the configuration of the local oscillator signal control portion of Fig. 3; and
Fig. 16 is shows a second example of the configuration of the components shown in Fig. 2.

### DESCRIPTION OF THE PREFERRED EMBODIMENTS

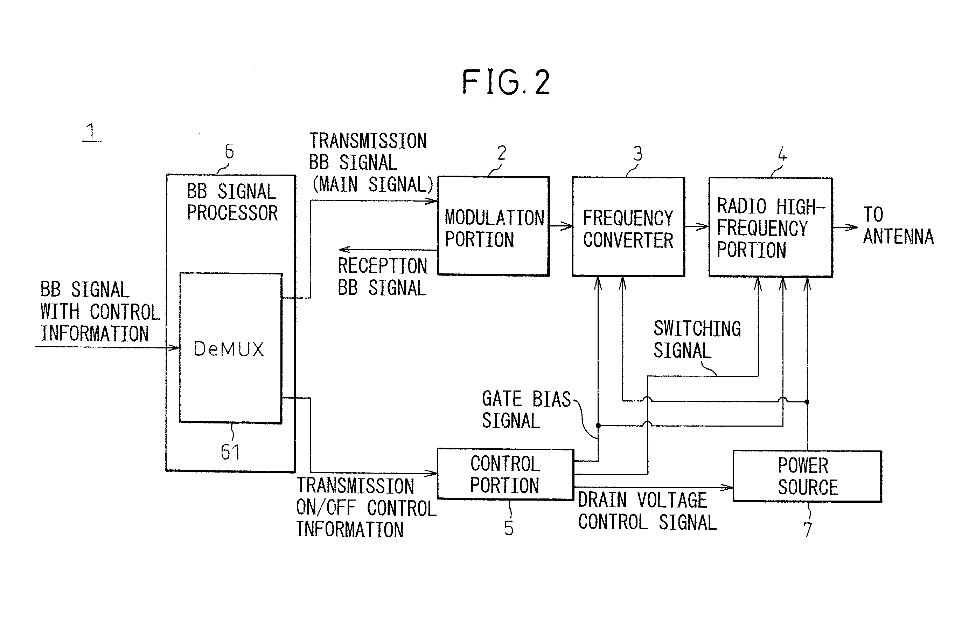

Preferred embodiments of the present invention will be described in detail below while referring to the attached figures. The configuration of a radio device in accordance with an embodiment of the present invention is shown schematically in Fig. 2.

The radio device 1 comprises the modulation/demodulation portion 2, which modulates a transmission baseband signal (transmission BB signal) into an analog transmission intermediate-frequency signal or demodulates an analog received intermediate-frequency signal into a received baseband signal (received BB signal); the frequency converter 3, which converts the frequency of the transmission intermediate-frequency signal to form a transmission radio-frequency signal and the frequency of a reception signal to form a received intermediate-frequency signal; and the radio high-frequency portion 4, which amplifies the transmission radio-frequency signal and also switches between output of the transmission radio-frequency signal to the antenna and input of the received radio-frequency signal from the antenna.

The radio device 1 also comprises a baseband signal processor 6, which inputs a transmission baseband signal (BB signal with control information) that contains transmission on/off control information within the overhead information, that switches the operating state of the radio device 1 between transmission operation and reception operation (or non-transmission operation), and separates a main transmission baseband signal and transmission on/off control information by using a multiplex separator (DeMUX) 61; the control portion 5 that switches the operating state of the radio device 1 between transmission operation and non-transmission operation, in accordance with the transmission on/off control information that was separated by the baseband signal processor 6; and a power source 7, which supplies power to the radio high-frequency portion 4 that amplifies the transmission radio-frequency signal.

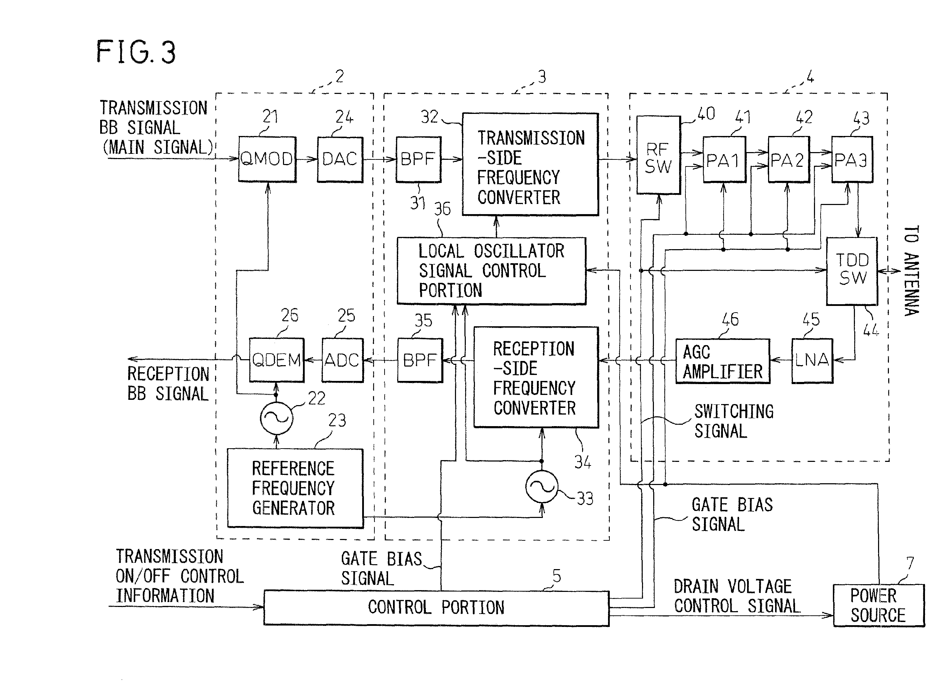

The internal configurations of a first example of the modulation/demodulation portion 2, the frequency converter 3, and the radio high-frequency portion 4 of Fig. 2 are shown in Fig. 3. In the example of the configuration of Fig. 3, the components that are similar in configuration to those of the prior-art radio device shown in Fig. 1 are given the same reference numbers and a detailed description thereof is omitted.

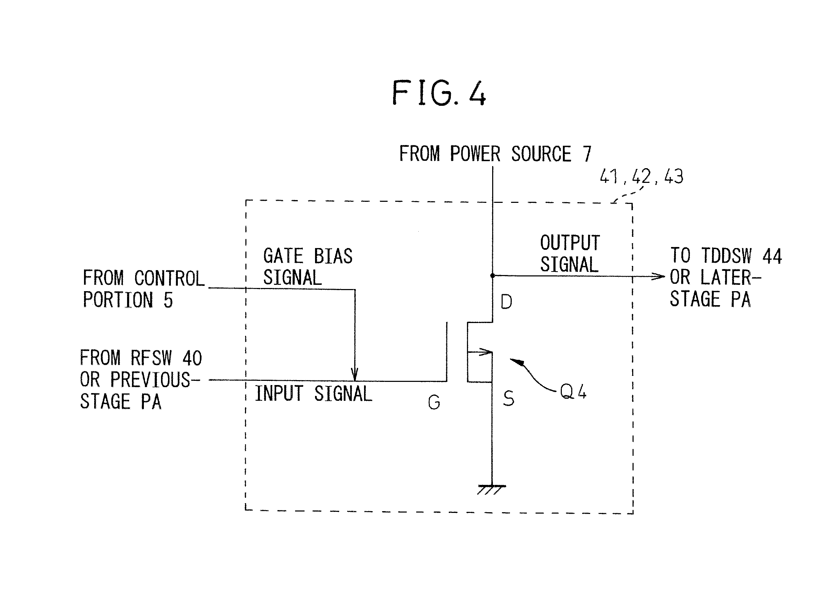

In addition, an example of the configuration of each of the high-power transmission output amplifiers 41 to 43 of Fig. 3 is shown in Fig. 4. As shown in this figure, each of the transmission output amplifiers 41 to 43 could be configured of a field-effect transistor Q4 for amplifying a transmission radio-frequency signal, with a source terminal S of the transistor Q4 being grounded, power from the power source 7 being supplied to a drain terminal D thereof to provide power for the amplification, and a transmission radio-frequency signal to be amplified being applied to a gate terminal G thereof, by way of example.

Returning to Fig. 3, the control portion 5 switches the operating state of the radio device 1 between transmission operation and non-transmission operation, in accordance with received transmission on/off control information. When the operating state of the radio device 1 is set to non-transmission operation, the radio-frequency band switch 40 is switched so as to disconnect the transmission-side frequency converter 32 and the transmission output amplifier 41. The control portion 5 switches the time division duplex switch 44, that is a two-pole switch, such that the transmission output amplifier 43 and the antenna (not shown in the figure) are disconnected, and such that the reception circuitry is connected to the antenna.

When the operating state of the radio device 1 is set to transmission operation, the control portion 5 switches the radio-frequency band switch 40 so as to connect the transmission-side frequency converter 32 and the transmission output amplifier 41. The control potion 5 switches the time division duplex switch 44 such that the transmission output amplifier 43 is connected to the antenna (not shown in the figure), and such that the reception circuitry and the antenna are disconnected.

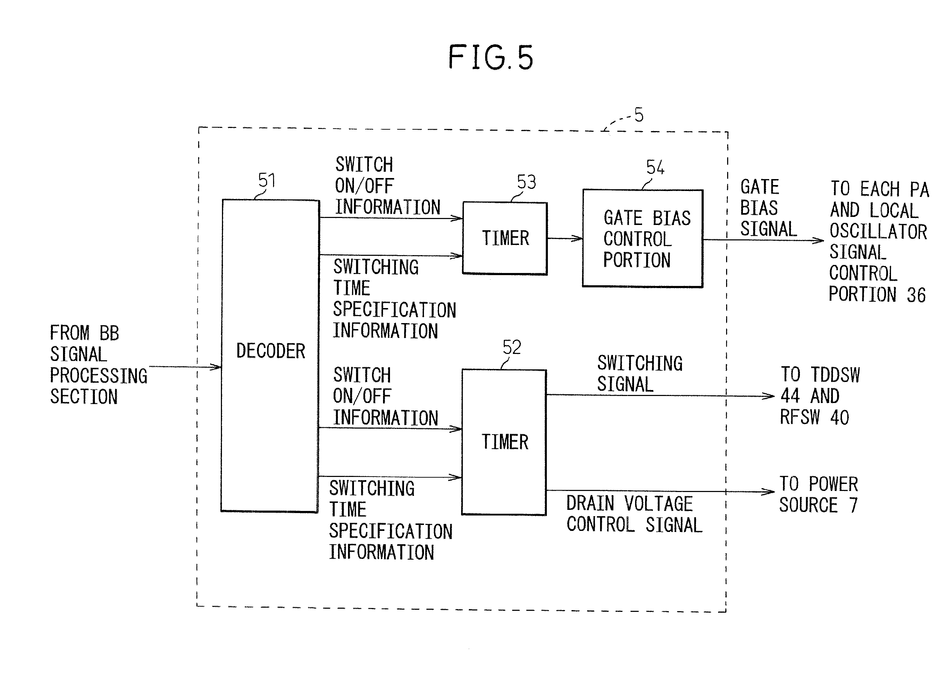

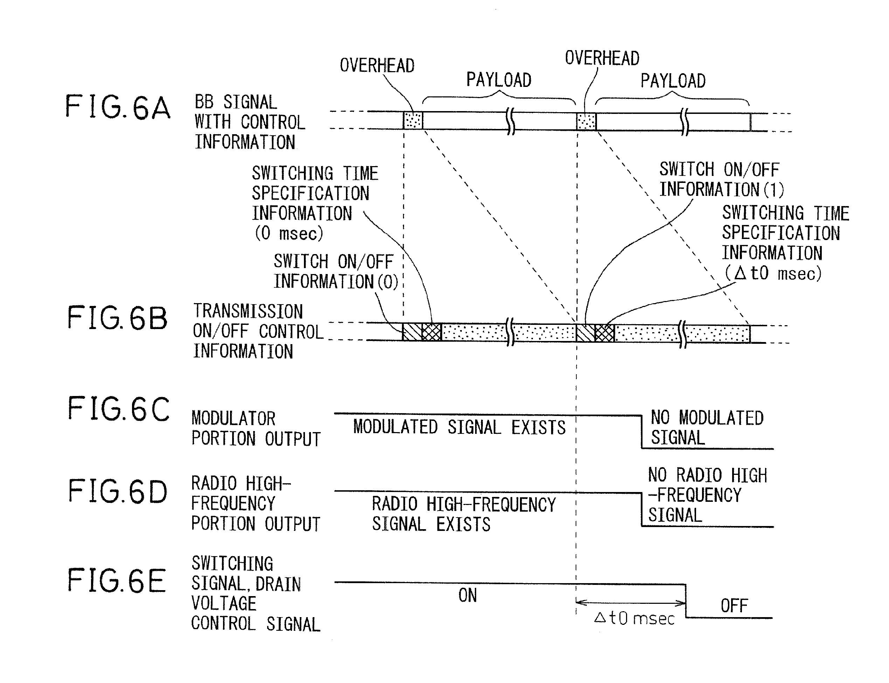

This state will now be described with reference to Figs. 5 and 6A to 6E.

Fig. 5 shows the configuration of the first example of the control portion 5 of Figs. 2 and 3, and Figs. 6A to 6E are timing charts used to illustrate the operations of switching between a transmission operation and a non-transmission operation of the radio device 1, by a transmission baseband signal that contains transmission on/off control information.

The control portion 5 shown in Fig. 5 comprises a decoder 51, which decodes overhead information that has been separated from the transmission baseband signal by the baseband signal processor 6 of Fig. 2 and extracts transmission on/off control information therefrom, and a timer 52, which generates a switching signal that applies switching control to the radio-frequency band switch 40 and the time division duplex switch 44, in accordance with switch on/off information and switching time specification information that is contained within this transmission on/off control information.

In this case, Fig. 6A is a timing chart of the transmission baseband signal that contains transmission on/off control information and Fig. 6B is a timing chart of transmission on/off control information extracted from the transmission baseband signal of Fig. 6A.

The transmission baseband signal that is input to the baseband signal processor 6 of Fig. 2 is provided in a format in which overhead information, that contains transmission on/off control information, is attached to a payload portion in which the main signal of the transmission baseband signal is stored, as shown in Fig. 6A. The multiplex separator (DeMUX) 61 within the baseband signal processor 6 separates the overhead information containing the transmission on/off control information from the transmission baseband signal shown in Fig. 6A.

The overhead information includes transmission on/off control information which consists of switch on/off information and switching time specification information, as shown in Fig. 6B.

In this case, the switch on/off information is information that indicates whether the operating state of the radio device 1 is to be transmission operation or non-transmission operation. When the switch an/off information is a value that indicates the non-transmission operation, the switching time specification information specifies the time from when the control portion 5 receives the switch on/off information until the transition to non-transmission operation (such as the switching of the radio-frequency band switch 40 and the time-division duplex switch 44).

In the example shown in Fig. 6B, when the value of the switch on/off information is 0, this indicates that the operating state of the radio device 1 is to be transmission operation; when it is 1, the operating state of the radio device 1 is to be non-transmission operation.

When the value of the switch on/off information is 1, the timer 52 of the control portion 5 measures the elapsed time from the reception of on/off information by the control portion 5 and, when the time specified in the switching time specification information (Δt0 ms) has elapsed, the timer 52 inverts the switching signal that switches over the radio-frequency band switch 40 and the time-division duplex switch 44 to switch the operating state of the radio device 1 to a non-transmission operation.

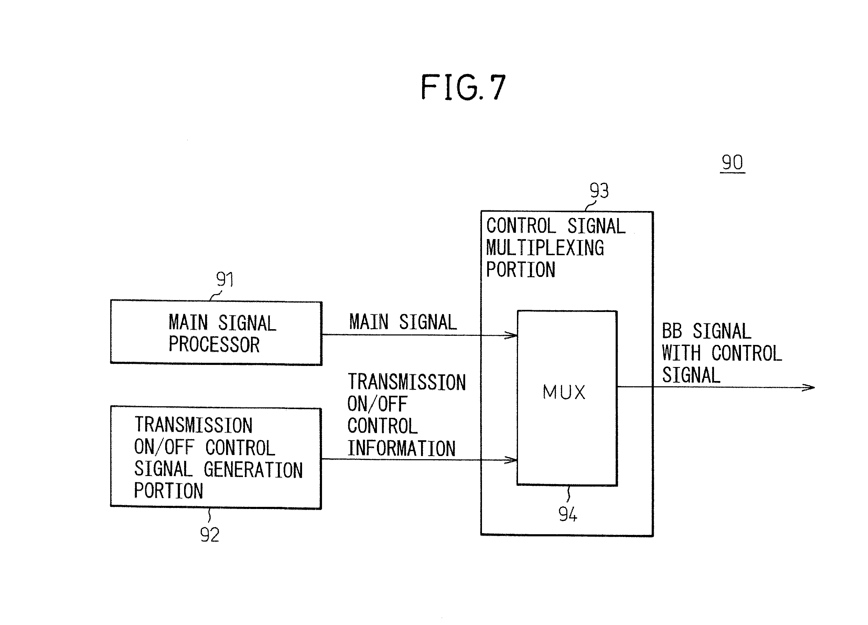

The transmission baseband signal containing the transmission on/off control information that is shown in Fig. 6A may be generated by a signal source 90 having the configuration shown in Fig. 7, by way of example. The thus-configured signal source 90 may be incorporated into the radio device 1 or it may be a separate device that supplies the transmission baseband signal to the radio device 1 from the outside.

The signal source 90 comprises a main signal processor 91 that generates a main signal for a transmission baseband signal that does not contain transmission on/off control information; a transmission on/off control information generation portion 92 that detects whether or not there is a main signal at predetermined periods, and causes the generation of the above-described transmission on/off control information; and a multiplexer (MUX) 94 that multiplexes the main signal of the transmission baseband signal and the transmission on/off control information.

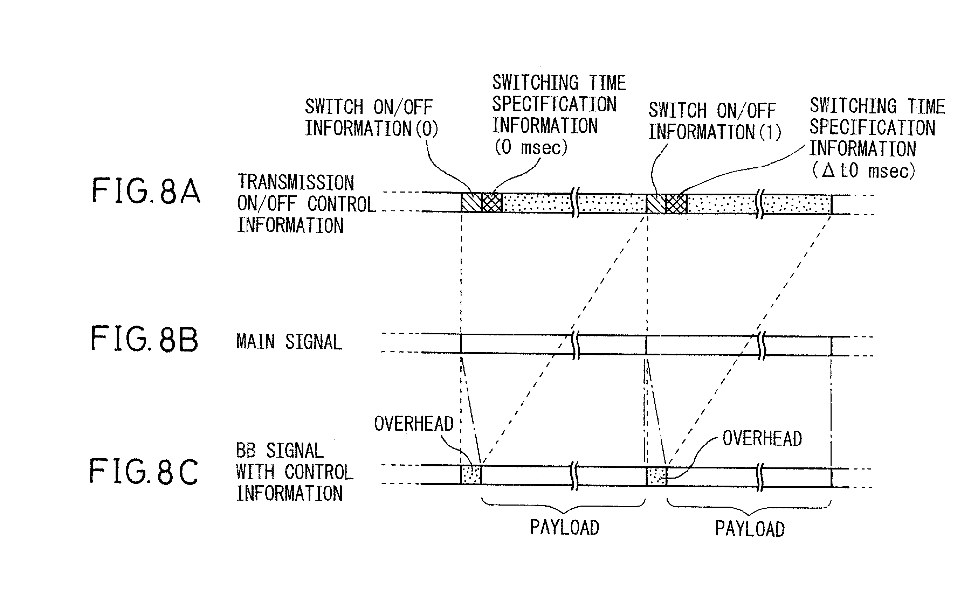

The multiplexer (MUX) 94 causes the generation of the transmission baseband signal containing the transmission on/off control information by multiplexing the transmission on/off control information shown in Fig. 8A as overhead information and adding the payload portion that stores the main signal of the transmission baseband signal (without transmission on/off control information) of Fig. 8B, as shown in Fig. 8C.

Returning to Fig. 5, the timer 52 of the control portion 5 reduces in the power supplied to the transmission output amplifiers 41 to 43 of Fig. 4 from the power source 7 when the operating state of the radio device 1 is switched to non-transmission operation, in comparison to when the operating state of the radio device 1 is transmission operation. The supply of power to the transmission output amplifiers 41 to 43 may preferably be halted when the operating state is switched to non-transmission operation.

In other words, when the value of the switch on/off information indicates that the operating state of the radio device 1 is to be non-transmission operation, the timer 52 measures the elapsed time from the time the control portion 5 receives the switch on/off information and, when the time specified in the switching time specification information (ΔtO) has elapsed, the power source 7 causes a decrease in the drain bias voltage supplied to the transmission output amplifiers 41 to 43 by varying the drain voltage control signal that controls the drain bias voltage supplied to the field-effect transistor Q4 of each of the transmission output amplifiers 41 to 43. The drain bias voltage supplied to the amplifiers 41 to 43 is zero preferably.

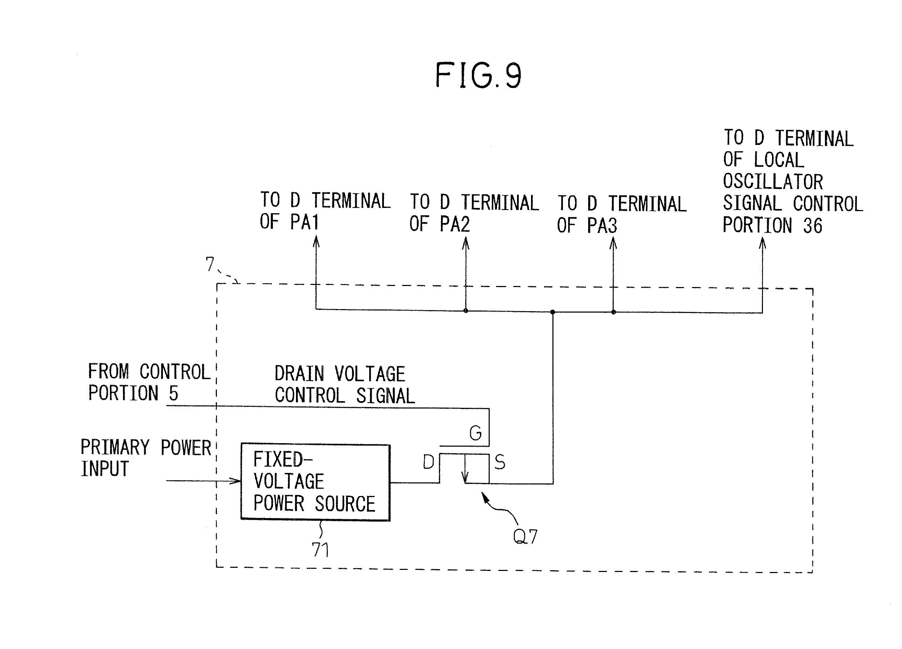

An example of the configuration of the power source 7 that can provide variable control of the drain bias voltage supplied to the transmission output amplifiers 41 to 43 by the drain voltage control signal from the control portion 5 is shown in Fig. 9.

The power source 7 comprises a fixed-voltage power source 71 which is supplied with a primary power source input from outside the radio device 1 and which supplies power at a constant voltage; and a field-effect transistor Q7 that controls the drain bias voltage supplied to the field-effect transistor Q4 of each of the transmission output amplifiers 41 to 43 from the fixed-voltage power source 71, in accordance with a drain voltage control signal that provides variable control from the control portion 5.

The timer 52 of the control portion 5 shown in Fig. 5 causes variations in the drain voltage control signal that controls the drain bias voltage that the power source 7 supplies to the field-effect transistor Q4 of each of the transmission output amplifiers 41 to 43, and thus decreases the drain bias voltage supplied to the transmission output amplifiers 41 to 43 when the value of the switch on/off information that was input from the decoder 51 indicates non-transmission operation and when the time specified in the switching time specification information has elapsed after the control portion 5 has received the switch on/off information. The drain bias voltage is preferably zero.

When the drain bias voltage of each of the transmission output amplifiers 41 to 43 drops, the gain thereof also drops. Thus the timer 52 of the control portion 5 and the field-effect transistor Q7 of the power source 7 correspond to a gain modification portion as set forth in the claims of the present invention.

As the control portion 5 also switches over the radio-frequency band switch 40 and the time-division duplex switch 44 to switch the operating state of the radio device between transmission operation and non-transmission operation, the control portion 5 corresponds to an operating state switching portion as set forth in the claims of the present invention.

Even if a noise component is generated in the transmission circuitry during non-transmission operation, the reduction of the gain of the transmission output amplifiers 41 to 43, preferably by halting the power supply to the transmission output amplifiers 41 to 43 completely, ensures that the noise component appearing at the input terminals of the time-division duplex switch 44 remains low and thus the amount of noise leaking into the reception circuitry through the time-division duplex switch 44 can be kept low.

In addition, power dissipation in the transmission output amplifiers 41 to 43 can be reduced during non-transmission operation by reducing the drain voltage supplied to the transmission output amplifiers 41 to 43 during the non-transmission operation, preferably by halting the supply thereof completely.

When the drain voltage supplied to the transmission output amplifiers 41 to 43 is reduced during non-transmission operation, the drain voltage of each of the plurality of transmission output amplifiers 41 to 43 connected in series, as described above, can be made to drop simultaneously.

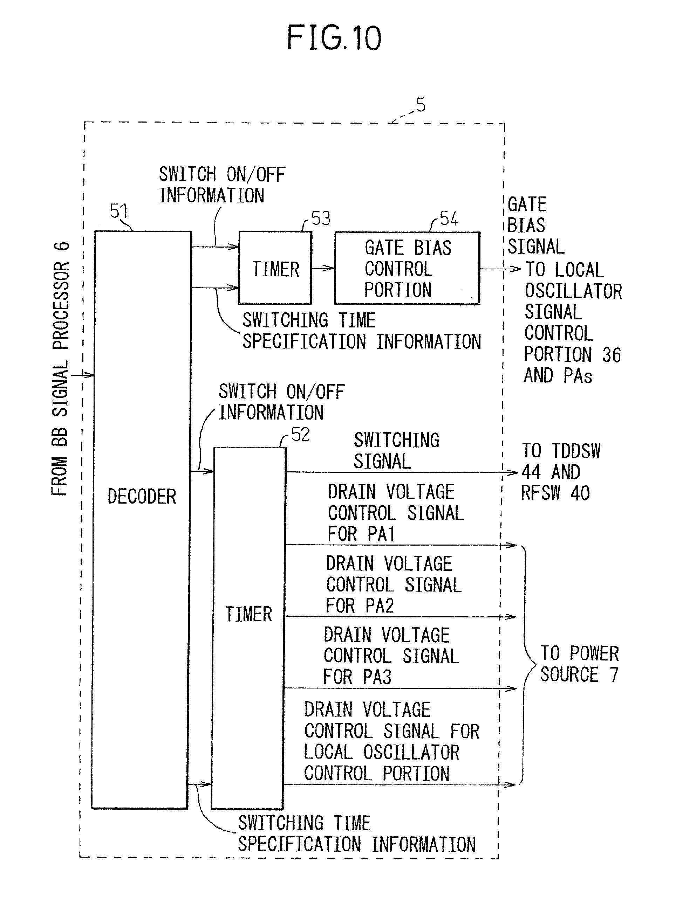

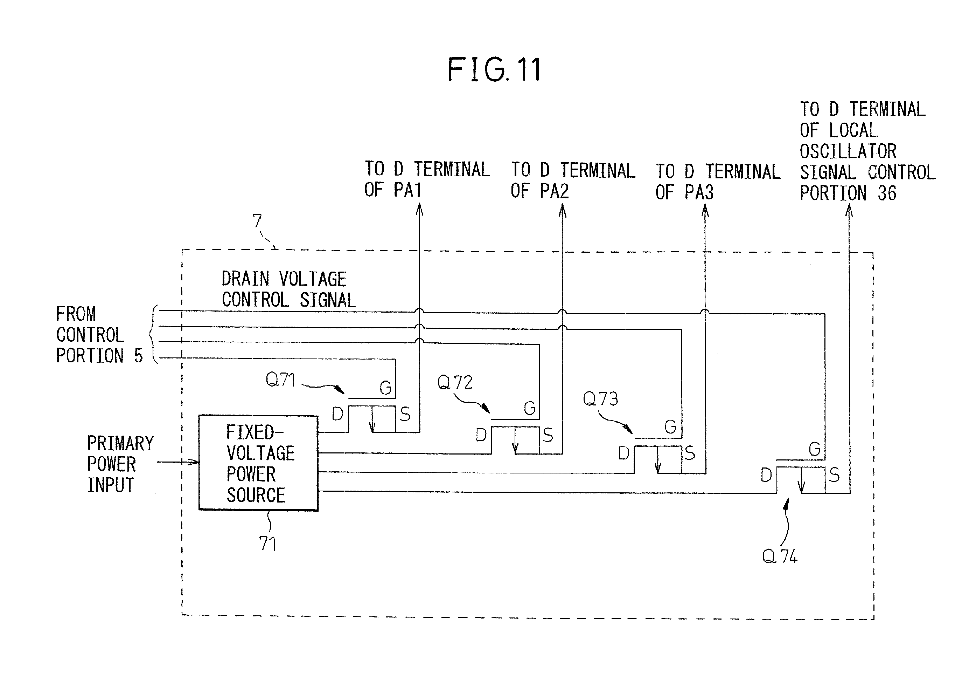

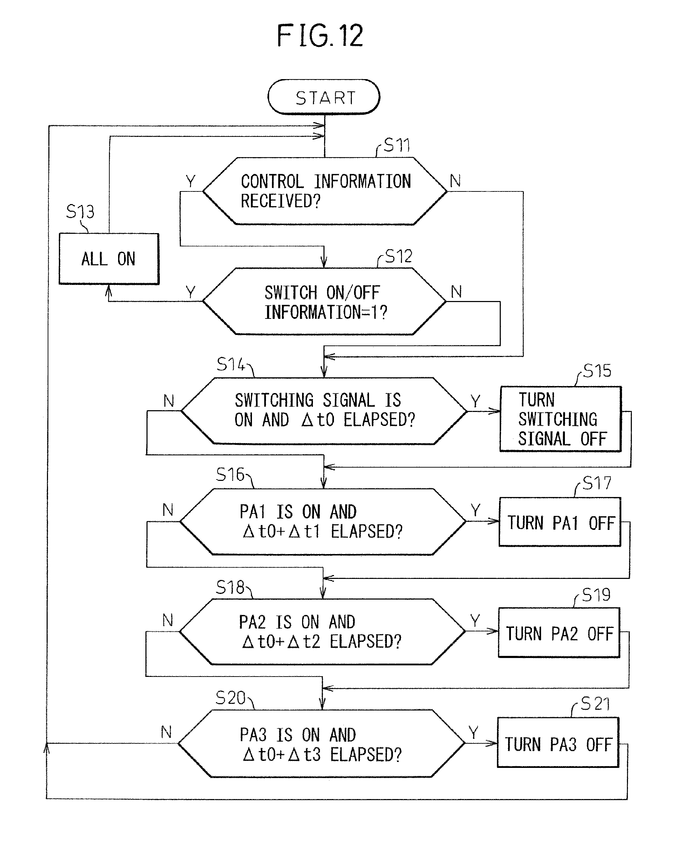

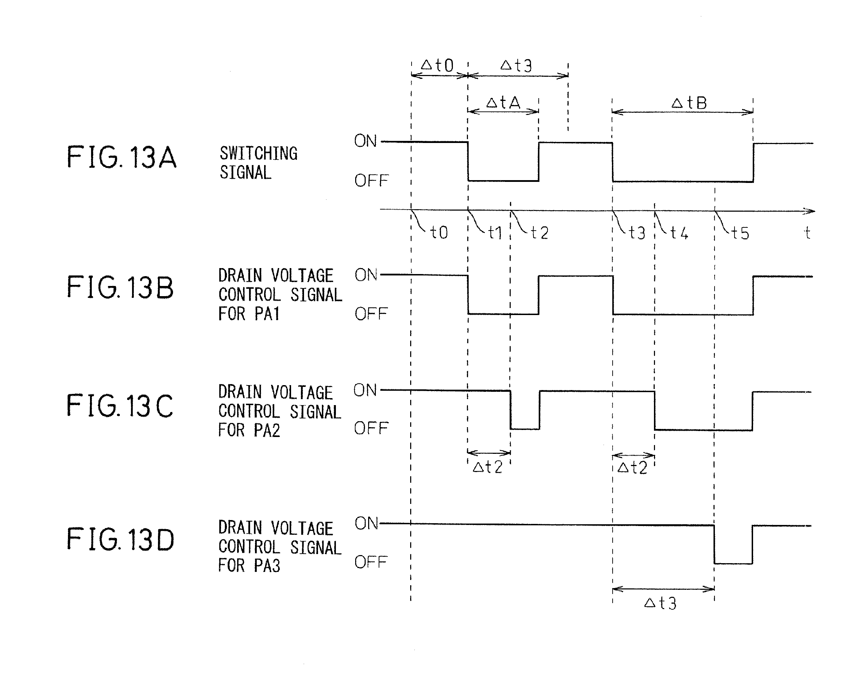

Alternatively, the gains of the amplifiers 41, 42, and 43 could be lowered in sequence such that the gain of the previous-stage amplifier is lowered in advance of that of the later-stage amplifier. As the later-stage amplifiers (such as the amplifier 43) that form high-output stages handle higher powers, this process ensures that damage to the later-stage amplifiers due to sudden drops in the power supply can be prevented by first halting the supply of power for the low-output previous-stage amplifiers then lowering or halting the power to the later-stage amplifiers after the input power to the later-stage amplifiers has dropped. A second example of the configuration of the control portion 5 that enables this sequential control of the drain voltages of the amplifiers 41, 42, and 43 is shown in Fig. 10, and a second example of the configuration of the power source 7 is shown in Fig. 11. A flow chart of the operation of the control portion 5 is shown in Fig. 12. A timing chart of the switching signal that is controlled by the flowchart of Fig. 12 is shown in Fig. 13A, and timing charts of each of the drain voltage control signals that are controlled by the flowchart of Fig. 12 are shown in Figs. 13B to 13D.

As shown in Fig. 10, the timer 52 that controls the drain voltage of each of the transmission output amplifiers 41 to 43 outputs drain voltage control signals through individual signal lines provided for the transmission output amplifiers 41 to 43. As shown in Fig. 11, the power source 7 also uses field-effect transistors Q71 to Q73 that are provided for the transmission output amplifiers 41 to 43, respectively, to control the drain voltages of the amplifiers 41 to 43, by the drain voltage control signals that are input through these individual signal lines. The thus-configured control portion 5 and power source 7 make it possible to either reduce the drain voltage or halt the supply of power at timings that differ for each of the transmission output amplifiers 41 to 43.

The following description concerns an operating method of the control portion 5 to either reduce or halt the supply of the bias drain voltages in sequence to the multi-stage transmission output amplifiers 41 to 43, in order, from the most previous-stage during non-transmission operation, with reference to Figs. 12 and 13A to 13D.

In this case, if the switching signal that switches the radio-frequency band switch 40 and the time-division duplex switch 44 is in an on state during transmission operation and an off state during non-transmission operation, when each of the drain bias voltage control signals is in an on state, that indicates that the normal drain bias voltage is to be supplied to the corresponding transmission output amplifier 41 to 43 during transmission operation; when it is in an off state, that indicates that a comparatively low drain bias voltage is to be supplied to the transmission output amplifiers 41 to 43 during non-transmission operation, or that the supply of the drain bias voltage is to be halted.

First of all, when the control portion 5 receives transmission on/off control information that has been input from the baseband signal processor 6 at a time t0 shown in Fig. 13A, in a step S11 in Fig. 12, the control portion 5 decodes the transmission on/off control information by the decoder 51 in a step S12, and determines whether or not the switch on/off information included in the transmission on/off control information indicates that the operating state of the radio device 1 is to be a non-transmission operation.

If the switch on/off information does not have the value (1) that indicates that the operating state of the radio device 1 is to be non-transmission operation, the flow goes to step S13 in which the switching signal and all the drain bias voltage control signals are set to the on state. If the setting of the switching signal and all the drain bias voltage control signals to the on state occurs, that state is maintained.

If the switch on/off information does have the value
(1) that indicates that the operating state of the radio device 1 is to be non-transmission operation, the flow moves to a step S14 to output switch on/off information and switching time specification information to the timer 52.

In step S14, the timer 52 determines whether or not a predetermined wait time Δt0 that is specified in the switching time specification information has elapsed and, if the wait time Δt0 has elapsed, the switching signal is set to the off state in a step S15. This state is shown in Fig. 13A.

In a step S16, the timer 52 determines whether or not a time that is the predetermined wait time Δt0 plus a predetermined time difference Δt1 has elapsed and, if that time Δt0 + Δt1 has elapsed, the timer 52 sets the drain voltage control signal for the transmission output amplifier 41 at the most previous-stage to the off state in a step S17. This state is shown in Fig. 13B. In this example, 0 is set as the time difference Δt1 and thus the drain bias voltage of the transmission output amplifier 41 is decreased or turned off simultaneously with the switchover of the operating state of the radio device 1 to non-transmission operation.

In a step S18, the timer 52 determines whether or not a time that is the predetermined wait time Δt0 plus a predetermined time difference Δt2 has elapsed and, if that time Δt0 + Δt2 has elapsed, the timer 52 sets the drain voltage control signal for the intermediate-stage transmission output amplifier 42 to the off state in a step S19. This state is shown in Fig. 13C. In this example, the time difference Δt2 is set to a non-zero value that is greater than that of Δt1, and thus the drain bias voltage of the intermediate-stage amplifier 42 is decreased or turned off later than that of the previous-stage amplifier 41.

In a step S20, the timer 52 determines whether or not a time that is the predetermined wait time Δt0 plus a predetermined time difference Δt3 has elapsed and, if that time Δt0 + Δt3 has elapsed, the timer 52 sets the drain voltage control signal for the final-stage transmission output amplifier 43 to the off state in a step S21. This state is shown in Fig. 13D. In this example, the time difference Δt3 is set to a value that is greater than that of Δt2, and thus the drain bias voltage of the later-stage amplifier 43 is decreased or turned off later than that of the previous-stage amplifiers and 41 and 42.

After the timer 52 determines whether or not the wait times for switching the switching signal and the drain voltage control signals of the amplifiers 41 to 43 have elapsed, in steps S14, S16, S18, and S20, the flow returns to step S11 and steps S11 to S21 are repeated.

As can be seen from reference to the times t3 to t5 in Figs. 13A to 13D, the times at which the drain bias voltages decrease or turn off are different for each of the amplifiers 41 to 43. In other words, the period during which the drain bias voltage decreases or turns off is longer for the earlier-stage amplifiers and, for that reason, the number of amplifiers of this plurality of transmission output amplifiers 41 to 43 in which the drain bias voltage decreases or is turned off by the timer 52 depends on the length of the period of non-transmission operation. For example, if a comparatively short period of non-transmission operation starts from the time t1, the period of non-transmission operation is shorter than the time difference Δt3 so the processing changes to transmission operation before the drain bias voltage of the final-stage amplifier 43 is reduced or turned off. In contrast, if a comparatively long period of non-transmission operation starts from the time t3, the period of non-transmission operation is longer than the time difference Δt3 and thus the drain bias voltages of all of the amplifiers 41 to 43 will have been reduced or turned off.

Various problems such as a delay of the operation of the amplifiers due to residual charges in the drain terminals of the field-effect transistors within the amplifiers can be avoided in this manner, by varying the number of amplifiers for which the drain bias voltage is reduced or turned off, depending on the length of the period of non-transmission operation, and thus ensuring that the switching of the drain bias voltage of the later-stage amplifiers that handle higher power levels is restricted.

Returning to Fig. 5, the control portion 5 also comprises a timer 53 and a gate bias control portion 54 that control the gate bias voltage that is applied to the gate terminal G of the field-effect transistor Q4, in each of the transmission output amplifiers 41 to 43 shown in Fig. 4, when the operating state of the radio device 1 is switched to non-transmission operation by the timer 52, to reduce or block the drain current, in accordance with switch on/off information that is output from the decoder 51 and switching time specification information.

Since the gain of the transmission output amplifiers 41 to 43 in which the drain current is reduced or blocked is reduced in comparison to that during transmission operation, the timer 53 and the gate bias control portion 54 also correspond to part of the gain modification portion as set forth in the claims of the present invention.

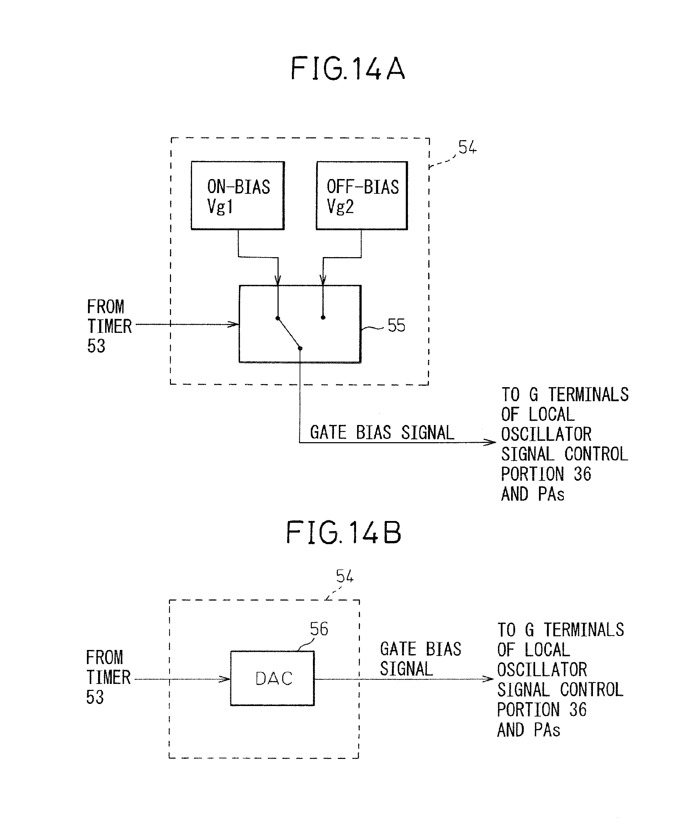

A first example of the configuration of the gate bias control portion 54 is shown in Fig. 14A and a second example of the configuration of the gate bias control portion 54 is shown in Fig. 14B. Two gate bias signals are provided in the configurational example shown in Fig. 14A: an on-bias Vg1 for causing a normal drain current to flow in the field-effect transistor Q4 in each of the transmission output amplifiers 41 to 43 during transmission operation and an off-bias Vg2 that reduces or blocks the drain current during non-transmission operation. The gate bias voltage that is applied to the gate terminal G of the field-effect transistor Q4 is modified by using a switch 55 to switch between these two gate bias signals, in accordance with a switchover signal from the timer 53 that switches the gate bias voltage.

In the configurational example shown in Fig. 14B, the gate bias control portion 4 comprises a digital/analog converter 56 that converts the digital signal that the timer 53 outputs into an analog gate bias signal, and the gate bias voltage that is applied to the gate terminal G of the field-effect transistor Q4 is modified by varying the value of the digital signal, that the timer 53 outputs, between transmission operation and non-transmission operation.

Note that the timer 53 and the gate bias control portion 54 could use a method similar to that by which the timer 52 and the power source 7 modify the drain bias voltage of the transmission output amplifiers 41 to 43, as described previously with reference to Figs. 5 and 6A to 6E, to modify the gate bias voltages of the transmission output amplifiers 41 to 43 between transmission operation and non-transmission operation.

In addition, the gate bias control portion 54 could be provided separately for each of the transmission output amplifiers 41 to 43, and the gate bias voltages of the serially-connected plurality of transmission output amplifiers 41 to 43 could be modified in sequence from the previous-stage amplifiers, by varying the timings of the modification of the gate bias voltage for each of the transmission output amplifiers 41 to 43 by a method similar to that by which the drain bias voltages of the transmission output amplifiers 41 to 43 are modified, as described previously with reference to Figs. 10, 11, 12, and 13A to 13D. In other words, the modification is done in the sequence of the amplifiers 41, 42, and 43, to lower the gains thereof.

Furthermore, it is possible to implement both the modification of the gate bias voltages of the transmission output amplifiers 41 to 43 by the timer 53 and the gate bias control portion 54 and the modification of the drain bias voltage by the timer 52 and the power source 7. In such a case, the timer 53 introduces a time difference between the modification of the drain bias voltage and the modification of the gate bias voltage, to ensure that the modification of the gate bias voltage is done before the timer 52 and the power source 7 reduces or turns off the drain bias voltage, during switchover to non-transmission operation.

The introduction of such a time difference makes it possible to avoid sudden changes in drain bias voltage in a state in which the drain current is flowing through each of the transmission output amplifiers 41 to 43, so that the amplifiers 41 to 43 can be designed to be stable even when field-effect transistors that are susceptible to power source fluctuations are used therein.

Returning to Fig. 3, the transmission-side frequency converter 32 provided in the frequency converter 3 of the radio device 1 mixes the local oscillator signal that is input from the local oscillator signal generation portion 33 with a transmission intermediate-frequency signal, to convert it to a transmission radio-frequency signal. The frequency converter 3 of this embodiment comprises a local oscillator signal control portion 36 for reducing the strength of the local oscillator signal that is input to the transmission-side frequency converter 32 during non-transmission operation to less than that during transmission operation, or otherwise halting the input of the local oscillator signal to the transmission-side frequency converter 32 during non-transmission operation.

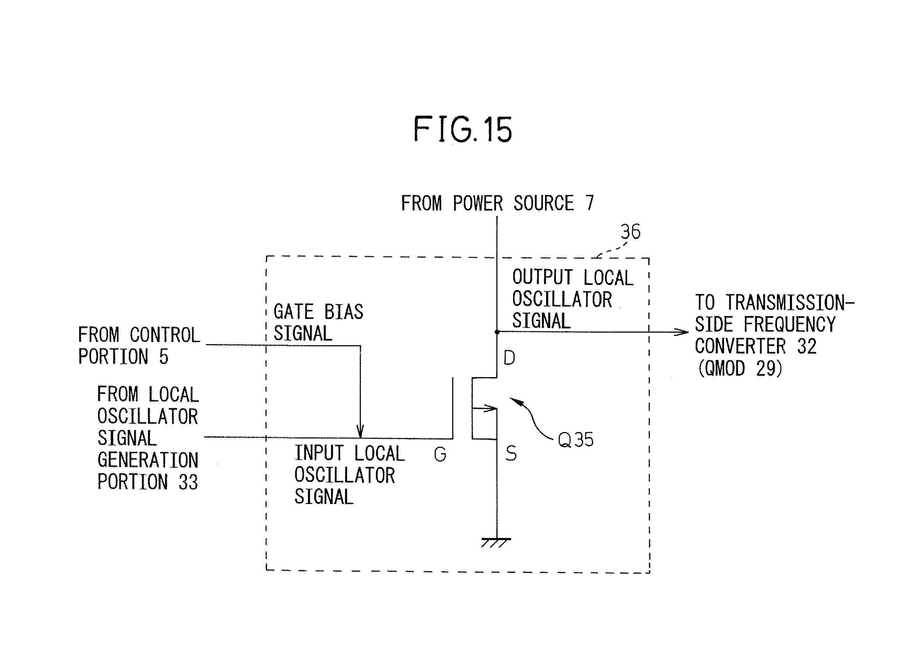

The configuration of an example of the local oscillator signal control portion 36 of Fig. 3 is shown in Fig. 15. The local oscillator signal control portion 36 comprises a field-effect transistor Q35 that inputs a local oscillator signal generated by the local oscillator signal generation portion 33 to the gate terminal G thereof and outputs the local oscillator signal from the drain terminal D thereof, which is an output terminal.

The drain voltage control signal that controls the drain bias voltage of the field-effect transistor Q35 of the local oscillator signal control portion 36 by the timer 52 is generated in a similar manner to the drain voltage control signal for controlling the drain bias voltage of the transmission output amplifiers 41 to 43, as described above.

The drain bias voltage supplied to the drain terminal D of the field-effect transistor Q35 of the local oscillator signal control portion 36 is modified by controlling the field-effect transistors Q7 and Q74 of the power source 7, shown in Figs. 9 and 11, respectively, using the drain voltage control signal for the local oscillator signal control portion 36, and the strength of the local oscillator signal that is extracted from the drain terminal D during non-transmission operation is reduced to less than that during transmission operation. Alternatively, the output of the local oscillator signal to the transmission-side frequency converter 32 is halted during non-transmission operation by halting the supply of the drain bias voltage.

In addition, the gate bias signal that controls the gate bias voltage of the field-effect transistor Q35 of the local oscillator signal control portion 36, using the timer 53 and the gate bias control portion 54 as shown in Figs. 5, 10, and 14, is generated in a similar manner to the gate bias signal to the transmission output amplifiers 41 to 43, as described previously. The strength of the local oscillator signal that is extracted from the drain terminal D is reduced during non-transmission operation by reducing the drain current flowing through the field-effect transistor Q35 during non-transmission operation to less than that during transmission operation, by controlling the gate bias voltage. Alternatively, the output of the local oscillator signal to the transmission-side frequency converter 32 is halted during non-transmission operation by halting the drain current flowing through the field-effect transistor Q35, by controlling the gate bias voltage.

In this case, the timers 52 and 53 and the gate bias control portion 54 of the control portion 5, together with the local oscillator signal control portion 36, correspond to a local oscillator signal strength modification portion as set forth in the claims of the present invention.

It is also possible to perform both the modification of the gate bias voltage of the local oscillator signal control portion 36 by the timer 53 and the gate bias control portion 54 and the modification of the drain bias voltage by the timer 52 and the power source 7. In such a case, the timer 53 introduces a time difference between the modification of the drain bias voltage and the modification of the gate bias voltage, to ensure that the modification of the gate bias voltage is done before the timer 52 and the power source 7 reduces or turns off the drain bias voltage, during switchover to non-transmission operation.

In this manner, the frequency component of the local oscillator signal that appears in the radio-frequency signal that is output from the transmission-side frequency converter 32 during non-transmission operation in which there is no input baseband signal can be reduced or removed by reducing or halting the local oscillator signal that is input to the transmission-side frequency converter 32 during non-transmission operation.

The local oscillator signal control portion 36 that reduces or halts the local oscillator signal during non-transmission operation has a particularly large effect if provided in a radio device that employs direct conversion modulation to implement quadrature modulation by mixing the local radio-frequency oscillator signal into an analog baseband signal.

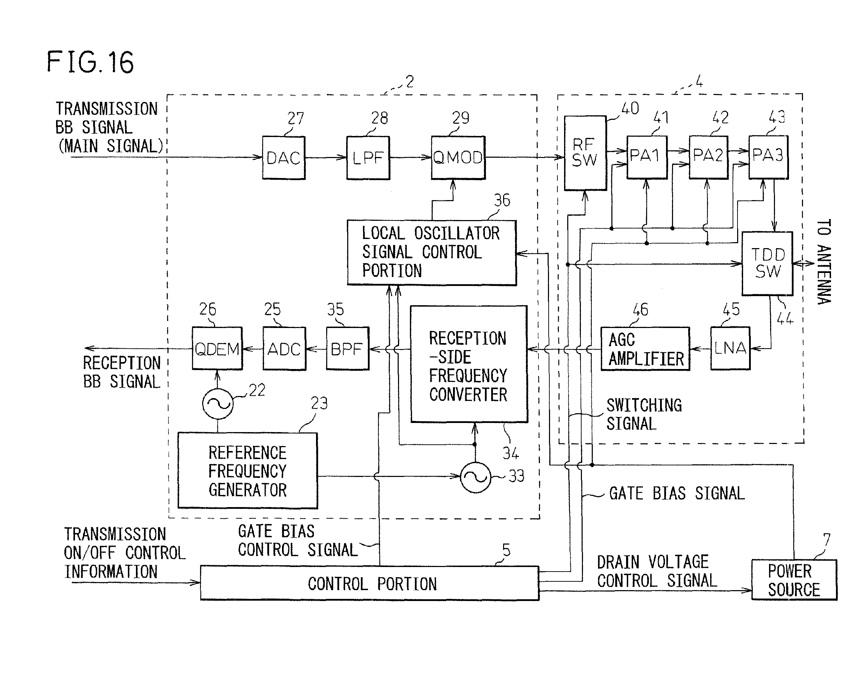

The configuration of a radio device that employs direct conversion modulation in accordance with a second embodiment of the present invention is shown in Fig. 16.

In this configurational example, the frequency converter 3 is not provided, but a transmission baseband signal is converted into an analog baseband signal by a digatal/analog converter 27, and unwanted components in the analog baseband signal are removed by a low-pass filter 28, and the quadrature modulator (QMOD) 29 modulates the analog baseband signal into a transmission ratio-frequency signal directly, by using the local oscillator signal generated by the local oscillator signal generation portion 33.

This direct conversion modulation is inconvenient in that, if there is no transmission baseband signal to be modulated, the frequency of the local oscillator signal appears at the center of band of the radio-frequency signal that is output from the quadrature modulator 29, which is difficult to remove by subsequent filtering.

In such a case, it is possible to efficiently remove the frequency component of the local oscillator signal that appears at the center of band of the radio-frequency signal that is output from the quadrature modulator 29 during non-transmission operation by providing the local oscillator signal control portion 36, which was described with reference to Fig. 15, between the quadrature modulator 29 and the local oscillator signal generation portion 33 , and reducing the strength of the local oscillator signal that is input to the quadrature modulator 29 during non-transmission operation to less than that during transmission operation, or halting it completely.

Note that in the above-described embodying examples, the control portion 5 switches the operating state of the radio device 1 between transmission operation and non-transmission operation in accordance with the transmission on/off information contained within the overhead information of the transmission baseband signal, but the switching of the operating state of the radio device 1 between transmission operation and non-transmission operation may also be done by detecting the presence or absence of the transmission baseband signal itself.

In a radio device that transmits a high-output signal, it is possible to save wasteful consumption of power in a non-signal-transmission state (such as during reception), and thus reduce the amount of power consumed by the entire transmission circuitry, by lowering the gain of each transmission output amplifier in the non-signal-transmission state.

In addition, leakage of noise components from the transmission circuitry to the reception circuitry can be reduced by lowering of the gain of the transmission output amplifier in the non-signal-transmission state, or by reducing the strength of the local oscillator signal used for the conversion of the frequency of the transmission signal to a radio signal frequency and thus reducing the local oscillator signal components that appear in the center of the band of the radio-frequency signal in the non-signal-transmission state.

The present invention can be used in a radio device that performs a type of half duplex transfer such as time division duplex or half frequency division duplex, and, in particular, it is ideal for use in a radio device that conforms to WiMAX.

While the invention has been described with reference to specific embodiments chosen for purpose of illustration, it should be apparent that numerous modifications could be made thereto, by those skilled in the art, without departing from the basic concept and scope of the invention.

## Claims

1. A radio device (1) which performs time division duplexing or half duplexing and has transmission output amplifier (41, 42, 43) which amplifies a transmission radio-frequency signal, the radio device (1) comprising:
an operating state switching portion (5) which switches the operating state of said radio device (1) between transmission operation and non-transmission operation; and
a gain modification portion (Q7, Q71, Q72, Q73, 54) which lowers the gain of said transmission output amplifier (41, 42, 43) during said non-transmission operation, in accordance with a switching signal from said operating state switching portion (5).

2. The radio device (1) as set forth in claim 1, wherein:
said transmission output amplifier (41, 42, 43) comprises a field-effect transistor (Q4) which amplifies said transmission radio-frequency signal; and
said gain modification portion (Q7, Q71, Q72, Q73) varies the gain of said transmission output amplifier (41, 42, 43) by modifying a drain bias voltage which is supplied to said field-effect transistor (Q4).

3. The radio device (1) as set forth in claim 1, wherein:
said transmission output amplifier (41, 42, 43) comprises a field-effect transistor (Q4) which amplifies said transmission radio-frequency signal; and
said gain modification portion (54) varies the gain of said transmission output amplifier (41, 42, 43) by modifying a gate bias voltage which is applied to said field-effect transistor (Q4).

4. The radio device (1) as set forth in claim 1, wherein:
said transmission output amplifier (41, 42, 43) comprises a field-effect transistor (Q4) which amplifies said transmission radio-frequency signal; and
said gain modification portion (Q7, Q71, Q72, Q73, 54) varies the gain of said transmission output amplifier (41, 42, 43) by modifying a drain bias voltage supplied to said field-effect transistor (Q4) and a gate bias voltage applied to said field-effect transistor (Q4), and said gain modification portion (Q7, Q71, Q72, Q73, 54) modifies these bias voltages at different times.

5. The radio device (1) as set forth in any of claims 1 to 4, wherein:
said transmission output amplifier (41, 42, 43) comprises a plurality of serially-connected amplifiers (41, 42, 43), and said gain modification portion (Q71, Q72, Q73, 54) lowers the gains of said amplifiers in sequence from the first thereof.

6. The radio device (1) as set forth in claim 5, wherein:
said gain modification portion (Q71, Q72, Q73, 54) lowers the gains of a number of amplifiers from among said plurality of amplifiers (41, 42, 43) in different manners in accordance with the length of the period of non-transmission operation.

7. A radio device (1) which performs time division duplexing or half duplexing and has a frequency converter (32) which converts the frequency of a transmission signal to a radio signal frequency, the radio device comprising:
an operating state switching portion (5) which switches the operating state of said radio device (1) between transmission operation and non-transmission operation; and
a local oscillator signal strength modification portion (Q74, 54) which lowers the strength of a local oscillator signal used by said frequency converter (32), during non-transmission operation in accordance with a switching signal from said operating state switching portion (5).

8. The radio device (1) as set forth in claim 7, wherein:
said radio device (1) further comprises a field-effect transistor (Q35) which inputs and outputs said local oscillator signal; and
said local oscillator signal strength modification portion (Q74) modifies the strength of said local oscillator signal by modifying a drain bias voltage which is supplied to said field-effect transistor (Q35).

9. The radio device (1) as set forth in claim 7, wherein:
said radio device (1) further comprises a field-effect transistor (Q35) which inputs and outputs said local oscillator signal;
said local oscillator signal strength modification portion (54) modifies the strength of said local oscillator signal by modifying a gate bias voltage which is applied to said field-effect transistor (Q35).

10. The radio device (1) as set forth in claim 7, wherein:
said radio device (1) further comprises a field-effect transistor (Q35) which inputs and outputs said local oscillator signal;
said local oscillator signal strength modification portion (Q74, 54) modifies the strength of said local oscillator signal by modifying a drain bias voltage supplied to said field-effect transistor (Q35) and a gate bias voltage applied to said field-effect transistor (Q35), and said local oscillator signal strength modification portion (Q74, Q75) modifies these bias voltages at different times.

11. A method for controlling a radio device (1) wherein said radio device (1) amplifies a transmission radio-frequency signal by transmission output amplifier (41, 42, 43) and also performs time division duplexing or half duplexing, and wherein the gain of said transmission output amplifier (41, 42, 43) is lowered during non-signal-transmission operation.

12. The method of controlling a radio device (1) as set forth in claim 11, wherein:
the gain of said transmission output amplifier (41, 42, 43) is varied by modifying a drain bias voltage which is supplied to a field-effect transistor (Q4) provided for said transmission output amplifier (41, 42, 43) in order to amplify said transmission radio-frequency signal.

13. The method of controlling a radio device (1) as set forth in claim 11, wherein:
the gain of said transmission output amplifier (41, 42, 43) is varied by modifying a gate bias voltage which is applied to a field-effect transistor (Q4) provided for said transmission output amplifier (41, 42, 43) in order to amplify said transmission radio-frequency signal.

14. The method of controlling a radio device (1) as set forth in claim 11, wherein:
the gain of said transmission output amplifier (41, 42, 43) is varied by modifying a drain bias voltage which is supplied to a field-effect transistor (Q4) provided for said transmission output amplifier (41, 42, 43) in order to amplify said transmission radio-frequency signal and modifying a gate bias voltage which is applied to said field-effect transistor (Q4); and
these bias voltages are modified at different times.

15. The method of controlling a radio device (1) as set forth in any of claims 11 to 14, wherein:
said transmission output amplifier (41, 42, 43) comprises a plurality of serially-connected amplifiers (41, 42, 43), and the gains of said amplifiers are lowered in sequence from the first thereof.

16. The method of controlling a radio device (1) as set forth in claim 15, wherein:
the gains of a number of amplifiers from said plurality of amplifiers (41, 42, 43) are lowered in accordance with the length of the period of non-transmission operation.

17. A method of controlling a radio device (1) wherein said radio device (1) converts the frequency of a transmission signal to a radio signal frequency by using a predetermined local oscillator signal and performs time division duplexing or half duplexing, and wherein the strength of said local oscillator signal is lowered during non-signal-transmission.

18. The method of controlling a radio device (1) as set forth in claim 17, wherein the strength of said local oscillator signal is modified by modifying a drain bias voltage supplied to a field-effect transistor (Q35) which is provided for controlling the strength of said local oscillator signal.

19. The method of controlling a radio device (1) as set forth in claim 17, wherein the strength of said local oscillator signal is modified by modifying a gate bias voltage applied to a field-effect transistor (Q35) which is provided for controlling the strength of said local oscillator signal.

20. The method of controlling a radio device (1) as set forth in claim 17, wherein:
the strength of said local oscillator signal is modified by modifying a drain bias voltage supplied to a field-effect transistor (Q35) which is provided for controlling the strength of said local oscillator signal and a gate bias voltage applied to said field-effect transistor (Q35); and
these bias voltages are modified at different times.
